# FASCICULE DE BREVET EUROPEEN

(11) **EP 0 509 928 B1**
(45) Date de publication et mention de la délivrance du brevet: **27.09.1995**
(21) Numéro de dépôt: 92401074.7
(22) Date de dépôt: 16.04.1992
(51) Int. Cl.: B01J 3/06, B30B 1/32

(54) **Presse haute pression**
Hochdruckpresse
High pressure press

(30) Priorité: 18.04.1991 FR 9104818
(43) Date de publication de la demande: 21.10.1992
(73) Titulaire: Besson, Jean-Michel, F-91760 Itteville (FR); Hamel, Gérard, F-94800 Villejuif (FR); Weill, Guillaume, F-78330 Fontenay-le-Fleury (FR)
(72) Inventeur: Besson, Jean-Michel, F-91760 Itteville (FR); Hamel, Gérard, F-94800 Villejuif (FR); Weill, Guillaume, F-78330 Fontenay-le-Fleury (FR)
(74) Mandataire: Michelet, Alain

(56) Documents cités:
- DE-A- 1 627 842
- FR-A- 2 322 728
- GB-A- 1 356 993
- US-A- 3 150 570
- US-A- 3 191 383
- US-A- 4 467 702

## Description

L'invention concerne une presse haute pression.

Plus particulièrement elle concerne une presse permettant de soumettre un échantillon initialement liquide ou solide à des pressions de plusieurs dizaines de GPa, ce qui nécessite une capacité de 250 tonnes (force de 2.5 MN).

L'obtention de telles pressions est par exemple nécessaire au développement de nombreux sujets de recherche fondamentale ou appliquée concernant les études et synthèses de matériaux.

On a déjà proposé et réalisé des vérins hydrauliques, dont certains sont disponibles dans le commerce qui permettent d'obtenir des forces de plusieurs centaines ou milliers de tonnes. Toutefois pour cette capacité, les presses de l'art antérieur ont un volume, un encombrement et une masse considérables.

En effet, les presses sont en général conçues pour des déplacements de piston relativement importants et la tenue de la presse nécessite des corps de vérin de très grande dimension.

Des dispositifs d'un tel poids et d'un tel volume sont difficiles à manipuler et, de plus, leur mise en oeuvre pour la réalisation d'expériences telle que la diffusion de neutrons sous pression, pour lesquelles un volume d'expérimentations relativement limité est disponible, est pratiquement impossible.

Le problème à la base de l'invention est donc la réalisation d'une presse haute pression ayant un volume et une masse limités.

A cet effet, il est proposé une presse haute pression agissant sur deux enclumes entre lesquelles est établie la haute pression. La première de ces enclumes est portée par un plateau, la deuxième de ces enclumes est portée par un piston placé dans un pot de compression.

Le pot de compression est fixé au plateau et comporte un orifice d'admission d'un fluide qui permet la mise sous charge du piston. Le pot de compression comporte une bague de guidage qui guide le piston et un anneau d'étanchéité.

Le piston porte un joint d'étanchéité qui coopère avec l'anneau d'étanchéité et permet au fluide de mettre le piston sous pression.

Selon l'invention le pot de compression a une forme telle qu'il est déformable lors de la mise sous pression du piston mais que cette déformation n'affecte ni sa bague de guidage ni son anneau d'étanchéité.

Le pot de compression est une pièce massive, en principe en acier spécial traité. Sa partie supérieure, ouverte de forme extérieure cylindrique droite à section circulaire de diamètre D et d'axe A-A et une partie inférieure à section carrée de côté L perpendiculairement à l'axe A-A. La partie inférieure constitue le fond du pot de compression et porte l'orifice d'admission du fluide. La partie inférieure et la partie supérieure du pot de compression sont reliées par une zone de raccordement.

Les hauteurs respectives, de la partie supérieure cylindrique du pot de compression, de sa partie inférieure de section carrée, et de sa zone de raccordement sont approximativement égales parallèlement à l'axe A-A.

Le diamètre d du piston est approximativement égal à sa hauteur h. Le diamètre extérieur D de la partie supérieure du pot de compression est approximativement égal à 4/3 du diamètre d du piston. Le côté L de la partie inférieure du pot de compression est approximativement égale à deux fois le diamètre du piston. L'épaisseur E du fond du pot de compression est égale approximativement au cinquième du diamètre d du piston.

L'invention sera décrite plus en détail en référence aux dessins dans lesquels :
- La figure 1 est un corps de vérin d'une presse traditionnelle.
- La figure 2 est le corps de vérin de la presse de l'invention.
- La figure 3 est une représentation générale en coupe verticale de la presse de l'invention.
- La figure 4 est une vue en coupe du pot de compression selon l'invention.
- La figure 5 est une vue de dessus du pot de compression selon l'invention.

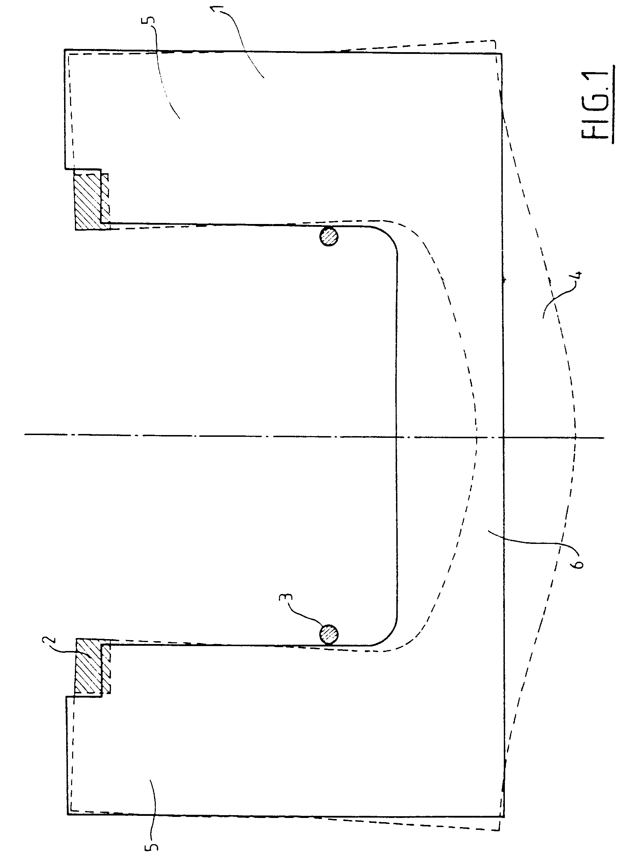

Les presses traditionnelles comportent un piston placé dans un corps de vérin 1 tel que représenté sur la figure 1. Dans cette figure le piston n'a pas été représenté ; il est positionné par rapport au corps de vérin par un anneau de guidage 2 et son étanchéité est assurée par le joint 3. Lorsqu'un fluide sous pression est injecté de manière à appliquer une force sur le piston, le corps de vérin subit une déformation et adopte la forme 4 représentée en tiretés sur la figure 1. La nature de la déformation produite provient essentiellement de la forme du corps de vérin qui est une forme cylindrique classique à paroi verticale ayant la même épaisseur du haut en bas.

Par l'effet de la déformation représentée, l'anneau de guidage 2 diminue de diamètre ce qui risque de produire un coincement du piston néfaste à son déplacement et à sa capacité à transmettre une pression et le diamètre du corps de vérin au niveau du joint 3 augmente, diminuant donc son étanchéité. Cette déformation produit donc simultanément une résistance au déplacement du piston et une perte d'étanchéité.

Jusqu'à présent les moyens proposés pour combattre ces effets néfastes consistent à éviter toute déformation en augmentant l'épaisseur des parois 5 et du fond 6 du corps de vérin. Cela entraîne la production de presses volumineuses et pesantes.

C'est à l'encontre de cette conception antérieure qu'il est proposé de réaliser une presse comportant un corps de vérin ou pot de compression déformable mais ayant une forme telle que lors de la mise sous pression du piston la déformation engendrée n'affecte ni la bague de guidage ni l'anneau d'étanchéité.

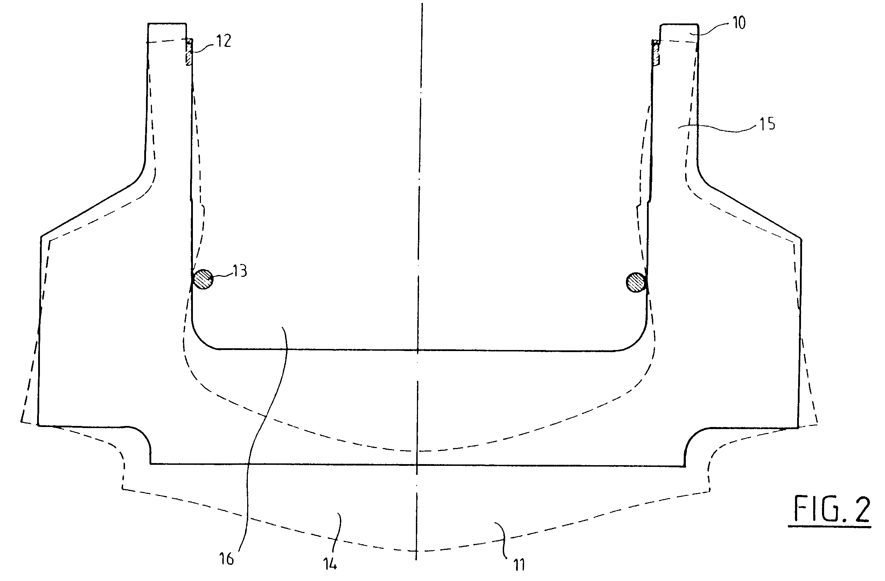

Un tel pot de compression est représenté en coupe verticale sur la figure 2. Le pot de compression, dans sa forme au repos, c'est-à-dire lorsqu'il n'est soumis à aucune pression est représenté en traits pleins et référencé 10. Lorsqu'il est soumis à une pression élevée sa forme, après déformation est représentée en traits discontinus et référencée 11. La bague de guidage 12 et l'anneau d'étanchéité 13 ne sont pas affectés par ces déformations c'est-à-dire que leur diamètre est maintenu constant. Au contraire, le fond 14 et les parois 15 du pot de compression sont fortement déformés ; toutefois ces déformations n'affectent ni la liberté de mouvement axial du piston ni l'étanchéité de la chambre de compression 16 comprise entre le piston et le fond 14 du pot de compression.

On appelle ici anneau d'étanchéité 13 la zone de pot de compression susceptible d'être en contact avec le joint d'étanchéité lors du déplacement du piston 28 dans le pot de compression. Cet anneau d'étanchéité 13 est donc en général une partie du pot de compression qui, lui-même, est une pièce massive, unitaire. Au contraire, la bague de guidage 12 est préférentiellement rapportée sur le corps du pot de compression.

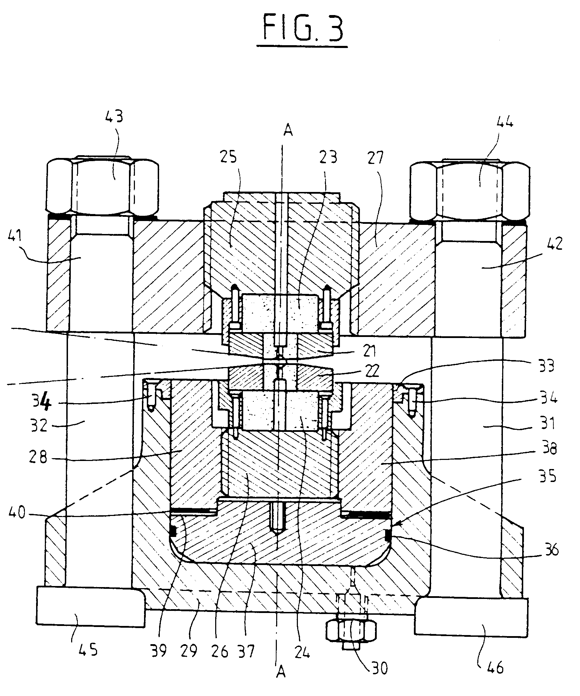

Un mode de réalisation particulier de la presse haute pression de l'invention est maintenant décrit en détail en référence à la figure 3.

Les enclumes 21 et 22 peuvent être plates (enclumes de Bridgman) ou bien comporter des logements toriques destinés à recevoir les échantillons que l'on veut soumettre à la haute pression, la force nécessaire étant produite par la presse. Les enclumes 21, 22 sont de préférence en carbure de tungstène.

Ces enclumes 21, 22 sont chacune portées par des sièges 23, 24 eux-mêmes en carbure de tungstène et venant en appui sur des culasses 25, 26.

La culasse 25 est fixée sur un plateau dit plateau fixe 27 alors que la culasse 26 est fixée sur le piston 28. Ce piston est mobile dans la direction de l'axe A-A. à l'intérieur du corps de vérin ou pot de compression 29.

La fixation de chacune des culasses 25, 26 est réalisée par vissage ; elles comportent chacune un filetage qui coopére avec un filetage complémentaire prévu à cet effet respectivement dans le plateau 27 et dans le piston 28.

Le pot de compression 29 comporte un orifice d'admission de fluide 30 susceptible d'être relié à une source de fluide sous une pression de 300 MPa.

Le pot de compression 29 est fixé par rapport au plateau 27 par les ensembles colonne-écrou 31, 32.

Ainsi l'introduction d'un fluide sous pression par l'orifice 30 produit le déplacement du piston 28, rapprochant l'enclume 22 de l'enclume 21 et réalisant entre ces deux enclumes la haute pression recherchée.

Un anneau de guidage 33 est rapporté sur le pot de compression 29 et fixé sur celui-ci par les vis 34. Le pot de compression 29 est une pièce massive, en acier dont la forme est telle que lors de l'introduction du fluide sous pression par l'orifice 30 elle est susceptible de se déformer, telle que représentée et décrite plus haut en référence à la figure 2, sans que cette déformation ne produise de contrainte ni au niveau de la bague de guidage 33 ni au niveau de l'anneau 35 et du joint d'étanchéité 36.

Ce joint d'étanchéité 36 évite les fuites de fluide vers l'extérieur du pot de compression. La géométrie originale décrite ici permet d'utiliser un joint tonique de nitrile seul jusqu'à des pressions dépassant 250 MPa dans le fluide de compression primaire.

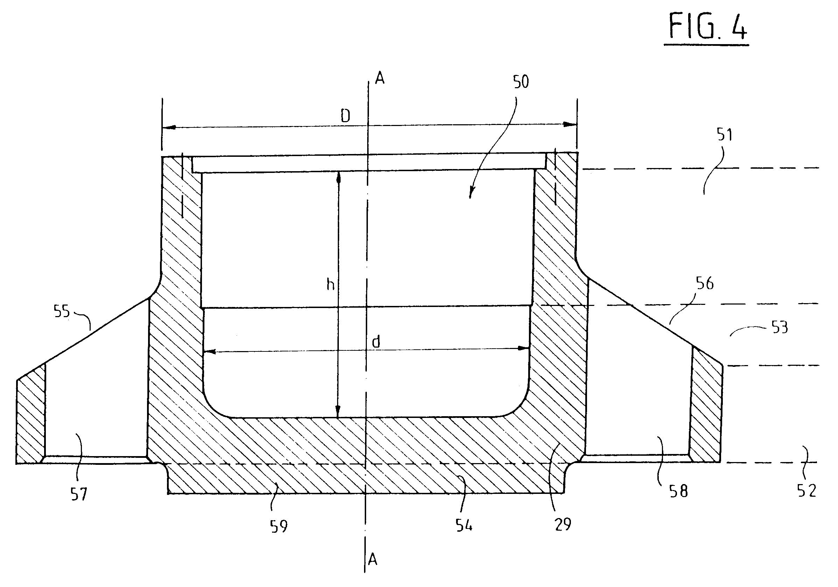

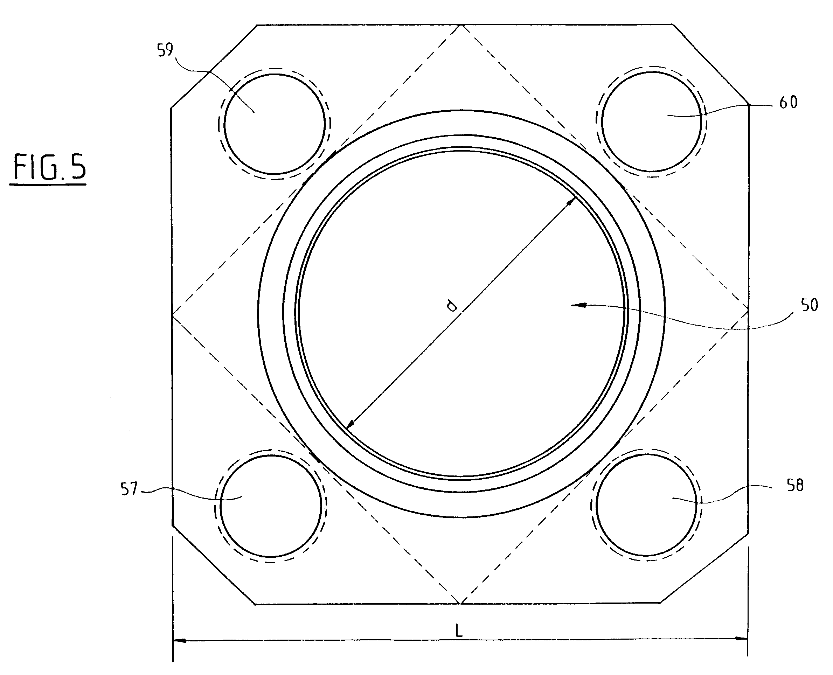

La forme du pot de compression 29 représentée sur les figures 2 et 3, et, plus en détail, sur les figures 4 et 5 est un mode de réalisation préféré permettant la mise en oeuvre de l'invention dans de très bonnes conditions.

Ces figures sont en elles-mêmes significatives et fourniront à l'homme de métier les informations les plus précises pour la reproduction de l'invention. Toutefois, à toutes fins utiles, cette forme sera maintenant décrite.

Le piston 28 a une forme générale extérieure de cylindre droit à section circulaire d'axe A-A. Sans que cela soit absolument nécessaire, il peut être réalisé en deux éléments, un contre-piston 37 constituant la base du piston et un piston supérieur 38 assurant son guidage. Le contre-piston 37 et le piston supérieur sont associés l'un à l'autre avec interposition de deux joints 39, 40 respectivement en nylon et en téflon.

Le pot de compression comporte une cavité intérieure en forme de cylindre droit à l'intérieur de laquelle se déplace le piston. Son diamètre d est approximativement égal à sa hauteur h. On appelle hauteur la dimension dans le sens de l'axe A-A qui correspond à la direction des déplacements du piston permettant le rapprochement des enclumes 21 et 22 l'une par rapport à l'autre.

Le cylindre de compression 29 est une pièce en acier massif. Sa forme extérieure peut être décomposée en trois zones respectivement appelées partie supérieure 51, partie inférieure 52, et zone intermédiaire 53. La partie inférieure 52 comporte le fond 54 de la cavité 50, la partie supérieure 51 est celle qui fait face au plateau 27 et à la région au voisinage de laquelle se trouve l'enclume 22.

La forme intérieure du pot de compression ayant été définie par la cavité 50 il sera maintenant fait référence à sa forme extérieure. Dans la partie supérieure 51 la forme extérieure du pot de compression 29 est un cylindre droit à section circulaire ayant également pour axe l'axe A-A. Le diamètre D de ce cylindre extérieur est environ égal à 4/3 du diamètre d.

La partie inférieure 52 est également un cylindre droit d'axe A-A. dont la section est approximativement carrée, la dimension L du côté de cette section étant approximativement égale à deux fois le diamètre d du piston 28.

La zone intermédiaire 53 définit une surface de liaison de forme conique qui vue en coupe comporte des éléments droits 55, 56 faisant un angle de l'ordre de 60° avec l'axe A-A.

Les hauteurs respectives de la partie supérieure 51, de la partie inférieure 52, de la zone intermédiaire 53 dans la direction de l'axe A-A. sont sensiblement égales chacune d'elles occupant environ un tiers de la hauteur totale du pot de compression.

Le pot de compression comporte des ouvertures 57, 58, 59, 60 destinées à recevoir les colonnes telles que les colonnes 31, 32 et à assurer la fixation du pot de compression 29 par rapport au plateau 27. Le plateau 27 comporte lui-même des ouvertures 41, 42 destinées à recevoir ces colonnes et à assurer cette fixation à l'aide des écrous 43, 44 qui coopèrent avec les colonnes 31, 32.

Ces ouvertures 57, 58 formées dans le pot de compression sont situées à la périphérie de la partie inférieure 52, de préférence au voisinage des angles de celle-ci.

Ainsi ces ouvertures traversent la partie inférieure du pot de compression sans traverser sa partie supérieure.

Les colonnes 31 et 32 comportent des têtes 45, 46 destinées à venir en appui sur le fond du pot de compression 29 au niveau des ouvertures 57, 58.

Le fond 54 du pot de compression a une épaisseur E approximativement égale au 1/5 du diamètre d du piston.

II comporte avantageusement une surépaisseur 59 d'une épaisseur d'environ 1/10 du diamètre du piston, de forme circulaire centrée sur l'axe A-A et de diamètre compris entre le diamètre d intérieur du corps de compression et son diamètre extérieur.

On a réalisé une presse de qualité ayant les dimensions suivantes :
. diamètre du piston d = 114 mm
. diamètre extérieur de la partie supérieure D = 145 mm
. côté de la partie inférieure L = 200 mm
. hauteur de la partie supérieure = 44,6 mm
. hauteur de la partie inférieure = 30 mm
. hauteur de la zone intermédiaire = 30 mm
. surépaisseur du fond = 10 mm.

La presse ainsi réalisée permet l'application d'une force au moins égale à 2,5 M-Newton pour une course du piston inférieure à 10 mm. La masse totale du dispositif est de 50 kg.

Une pression primaire de 250 M-Pa peut être appliquée et l'on a constaté une tenue aux fuites inférieure ou égale à 0,5 x 10⁻⁴/heure à 200 M-Pa.

L'utilisation de culasses, de préférence de culasses à pas d'artillerie permet d'annuler la flexion qui pourrait être produite sur le plateau 27 et/ou sur le piston 28. La déformation sous charge du plateau et du piston est absorbée par les filets des culasses qui travaillent, elles en compression. Cela permet de réduire l'effort de flexion sur les sièges 23, 24 en carbure de tungstène.

La manipulation de cette presse est particulièrement simple et elle permet entre-autre l'étude de la diffraction de neutrons ou la diffraction X par un échantillon sous pression.

Cette presse permet également des mesures à haute pression et à haute température telles que celles utiles à l'étude des synthèse et des transitions de phases en particulier pour l'observation in situ sous rayonnement synchrotron.

## Revendications

1. Presse haute pression agissant sur deux enclumes (21, 22) entre lesquelles est établie la haute pression, la première de ces enclumes (21) étant portée par un plateau (27), la deuxième de ces enclumes (22) étant portée par un piston (28) placé dans un pot de compression (29),
ledit pot de compression (29) étant fixé au plateau (27), comportant un orifice (30) d'admission d'un fluide permettant la mise sous charge du piston (28), une bague de guidage (33) guidant le piston (28) et un anneau d'étanchéité (35),
ledit piston portant un joint d'étanchéité (36) coopérant avec l'anneau d'étanchéité (35) pour permettre au fluide de mettre le piston (28) sous charge,
caractérisée en ce que
le pot de compression (29) a une forme telle qu'il est déformable lors de la mise sous pression du piston (28) et que cette déformation n'affecte ni sa bague de guidage (33), ni son anneau d'étanchéité (35),
le pot de compression (29) étant une pièce massive ayant une partie supérieure (51), ouverte, de forme extérieure cylindrique droite à section circulaire de diamètre D ayant un axe A-A, et une partie inférieure (52) de forme à section carrée de côté L, perpendiculairement à l'axe A-A, ladite partie inférieure constituant le fond du pot de compression et portant l'orifice (30) d'admission du fluide, ladite partie inférieure (52) et ladite partie supérieure (51) étant reliées par une zone de raccordement (53),
la hauteur de la partie supérieure (51) cylindrique, de la partie inférieure (52) de section carrée et de la zone de raccordement (53), parallèlement à l'axe A-A, étant approximativement égales,
le diamètre d du piston (28) étant approximativement égal à sa hauteur h, que le diamètre extérieur D de la partie supérieure (51) du pot de compression (29) étant approximativement égal à 4/3 du diamètre d du piston (28), le côté L de la partie inférieure du pot de compression (29) étant approximativement égal à deux fois le diamètre du piston (28), l'épaisseur E du fond (54) du pot de compression (29) étant égale approximativement à 1/5 du diamètre du piston (28).

2. Presse haute pression selon la revendication 1, caractérisée en ce qu'une culasse (25) fixe est interposée entre la première enclume (21) et le plateau (27), et qu'une culasse mobile (26) est interposée entre la deuxième enclume (22) et le piston (28).

3. Presse haute pression selon la revendication 2, caractérisée en ce que deux sièges (23, 24) sont interposés respectivement entre chaque culasse (25, 26) et l'enclume (21, 22) qu'elle porte.

4. Presse haute pression selon l'une quelconque des revendications 1 à 3, caractérisée en ce qu'elle comporte quatre ensembles colonne (31, 32) partiellement filetée - écrou,
le plateau et le pot de compression comportant chacun quatre ouvertures (41, 42) destinées à être traversées par les colonnes, les ensembles colonne-écrou assurant la fixation du plateau (27) sur le pot de compression (29).

5. Presse haute pression selon la revendication 4, caractérisée en ce que les ouvertures (57, 58) du pot de compression (29) sont placées à la périphérie de sa partie inférieure et ne traversent pas sa partie supérieure.

## Claims

1. High-pressure press acting on two blocks (21,22) between which the high pressure is established, the first of these blocks (21) being carried by a plate (27), the second of these blocks (22) being carried by a piston (28) located in a compression pot,
the said compression pot (29) being fixed to the plate (27), comprising a hole (30) for the introduction of a fluid allowing to bring the piston (28) under pressure, a guide ring (33) guiding the piston (28) and a sealing ring (35),
the said piston having a seal (36) that works with the sealing ring (35) to allow the fluid to bring the piston (28) under load,
characterized in that:
the form of the compression pot (29) is such that it can be deformed when the piston (28) is brought under pressure and that this deformation affects neither its guiding ring (33) nor its sealing ring (35),
the compression pot (29) is a solid part having an upper portion (51), open, with the external form of a straight cylinder of circular section of diameter D whose axis is A-A, and a lower portion (52) square in section of side L, perpendicular to the A-A axis, the said lower portion forming the bottom of the compression pot and being provided with the fluid introduction hole (30), the said lower portion (52) and the said upper portion (51) being connected by a connection zone (53),
the height of the cylindrical upper portion (51), the square section lower portion (52) and the connection zone (53), parallel to the A-A- axis, are approximately equal,
the diameter d of the piston (28) is approximately equal to its height h, the outside diameter D of the upper portion (51) of the compression pot (29) is approximately equal to 4/3 the diameter d of the piston (28), the side L of the lower portion of the compression pot (29) is approximately twice the diameter of the piston (28) and the thickness E of the bottom (54) of the compression pot (29) is approximately equal to 1/5 the diameter of the piston (28).

2. High-pressure press according to claim 1, characterized in that a fixed head (25) is interposed between the first block (21) and the plate (27), and in that a moving block (26) is fitted between the second block (22) and the piston (28).

3. High-pressure press according to claim 2, characterized in that two seats (23, 24) are interposed, respectively, between each head (25,26) and the block (21,22) that it carries.

4. High-pressure press according to any one of claims 1 to 3, characterized in that it comprises four partially threaded column-nut assemblies (31,32),
the plate and the compression pot each comprising four openings (41, 42) for the passage of the columns, the column-nut assemblies being used to fix the plate (27) onto the compression pot (29).

5. High-pressure press according to claim 4, characterized in that the openings (57, 58) of the compression pot (29) are located at the periphery of its lower portion and do not pass through its upper portion.

## Patentansprüche

1. Hochdruckpresse, die auf zwei Amboßbacken (21,22) wirkt, zwischen denen der hohe Druck aufgebaut wird, wobei die erste dieser Amboßbacken (21) von einer Platte (27) getragen wird, die zweite dieser Amboßbacken (22) von einem Kolben (28) getragen wird, der in einen Drucktopf (29) eingesetzt ist,
wobei der Drucktopf (29) an einer Platte (27) befestigt ist, umfassend eine Eintrittsöffnung (30) eines Fluid, welches das Belasten des Kolbens (28) gestattet, einen Führungsring (33), der den Kolben (28) führt, sowie einen Dichtring (35),
wobei der Kolben eine Dichtung (36) umfaßt, die mit dem Dichtring (35) zusammenwirkt, um dem Fluid zu erlauben, den Kolben (28) zu belasten,
**dadurch gekennzeichnet,**
daß der Drucktopf (29) eine solche Form aufweist, daß er bei dem Unterdrucksetzen des Kolbens (28) verformbar ist und daß diese Verformung weder seinen Führungsring (33) noch seinen Dichtring (35) beeinflußt,
der Drucktopf (29) ein massives Teil ist, welches einen oberen Abschnitt (51) hat, der offen mit einer äußeren Form als gerader Zylinder eines kreisförmigen Querschnitts mit dem Durchmesser D ist, welcher eine Achse A-A besitzt, und einen unteren Abschnitt (52) mit einer Form quadratischen Querschnitts der Seitenlänge L rechtwinklig zu der Achse A-A hat, wobei der untere Abschnitt den Boden des Drucktopfs bildet und die Eintrittsöffnung (30) des Fluid umfaßt, wobei der untere Abschnitt (52) und der obere Abschnitt (51) durch eine Verbindungszone (53) verbunden sind,
die Höhe des oberen zylindrischen Abschnitts (51), des unteren Abschnitts (52) quadratischen Querschnitts und der Verbindungszone (53) parallel zu der Achse A-A ungefähr gleich sind,
der Durchmesser des Kolbens (28) ungefähr gleich seiner Höhe h ist, daß der äußere Durchmesser D des oberen Abschnitts (51) des Drucktopfs (29) ungefähr gleich 4/3 des Durchmessers d des Kolbens (28) ist, die Seitenlänge L des unteren Abschnitts des Drucktopfs (29) ungefähr gleich zweimal dem Durchmesser des Kolbens (28) ist, die Dicke E des Bodens (54) des Drucktopfs (29) gleich ungefähr 1/5 des Durchmessers des Kolbens (28) ist.

2. Hochdruckpresse nach Anspruch 1,
**dadurch gekennzeichnet,**
daß ein fester Kopf (25) zwischen der ersten Amboßbacke (21) und der Platte (27) angeordnet ist und daß ein beweglicher Kopf (26) zwischen der zweiten Amboßbacke (22) und dem Kolben (28) angeordnet ist.

3. Hochdruckpresse nach Anspruch 2,
**dadurch gekennzeichnet,**
daß zwei Sitze (23,24,) vorgesehen sind, von denen jeweils einer zwischen jedem Kopf (25 bzw. 26) und der Amboßbacke (21 bzw. 22), die er trägt, angeordnet ist.

4. Hochdruckpresse nach einem der Ansprüche 1 bis 3,
**dadurch gekennzeichnet,**
daß sie vier teilweise mit einem Gewinde versehene Bolzen-Muttereinheiten (31,32) umfaßt,
die Platte und der Drucktopf jeweils vier Öffnungen (41,42) aufweisen, die dazu bestimmt sind, die Bolzen hindurchgehend aufzunehmen, so daß die Bolzen-Muttereinheiten die Befestigung der Platte (27) auf dem Drucktopf (29) sichern.

5. Hochdruckpresse nach Anspruch 4,
**dadurch gekennzeichnet,**
daß die Öffnungen (57,58) des Drucktopfs (29) an dem Rand seines unteren Abschnitts angeordnet sind und nicht durch seinen oberen Abschnitt hindurchgehen.
